# EUROPEAN PATENT APPLICATION

(11) **EP 1 873 431 A1**
(43) Date of publication of application: **02.01.2008**
(21) Application number: 07005357.4
(22) Date of filing: 15.03.2007
(51) Int. Cl.: F16K 11/085, F16K 5/04

(54) **Cylindrical plug valve**

(30) Priority: 28.06.2006 IT MI20061244
(71) Applicant: RIV RUBINETTERIE ITALIANE VALVOLE S.P.A., 28075 Grignasco (Novara) (IT)
(72) Inventor: Velatta, Artemio, 13011 Borgosesia (Vercelli) (IT); Velatta, Ruben, 13045 Gattinara (Vercelli) (IT)
(74) Representative: Lecce, Giovanni

(57) **Abstract**

A tap (10) for tanks carried by vehicles, especially suitable for tankers intended for carrying slurry, comprises a substantially cylindrical outside body (12) closed at the top by a plate (18) with screws (20), having the side surface provided with openings (14') delimited by integral flanges (14), as well as a plug (26) inserted in said outside body (12) and provided with openings (26') intended for communicating with said openings (14'); the plug (26) exhibits cylindrical shape complementary to that of the body (12).

## Description

The present invention relates to a baffle tap for tanks carried by vehicles.

More in particular, the present invention relates to a three-way baffle tap, especially suitable for so-called tankers, that is, vehicles provided with reservoir or tank containing slurry, both under pressure and at atmospheric pressure, to be distributed on farmland or agricultural planted zones. The baffle tap of the present invention may also be used on other types of vehicles, such as those called drainage vehicles and also in zootechnical/biogas systems.

It is known that tankers intended for carrying and distributing slurry are equipped with one or more baffle taps, typically three-way, protruding from the back front of the tank carried by the vehicle and connected by ducts to a unit for loading and discharging the slurry itself. The latter, coming from animal farms, is drawn as needed from special storage basins and introduced into the reservoirs or tanks of the tankers, which carry it to the required places and discharge it as liquid manure on the land through jet dispensers or multiple localised distribution nozzles. According to the position on the zone where the slurry must be distributed relative to the vehicle, the baffle tap is suitably set for the dispensing; the three outlets or ways of the tap, opposite front and side, are alternately actuated by hand or by servo-controls, by rotating the baffle located inside the tap itself, which generally closes one, leaving the other two free. The concurrent use of two ways may even result from the need of drawing different slurry, located in as many tanks or sectors of the tanker.

However, known baffle taps exhibit considerable disadvantages. A first disadvantage relates to the fact that such taps, in particular the baffle or plug, located in the outside body the dispensing ducts are attached to, is often difficult to operate in rotation, since the slurry is thick and unavoidably contains also solid residues that determine considerable frictions. The baffle or plug, moreover, is traditionally conical, for obtaining a metal on metal seal relative to the outside body wherein a complementary seat is obtained; due to the conical shape, also considering the density of the slurry, the baffle easily tends to seize, making its movement in rotation impossible. This disadvantage may be obviated by connecting a servo-mechanism, for example a hydraulic cylinder, to the operating shaft of the baffle, but this implies a considerable increase of the production costs of the tap. In the attempt of preventing such phenomena of seizure of the baffle, the use of a plurality of lubricators is envisaged; these are ducts obtained along the outside body, through which lubricating grease, which lays between the body itself and the actuator, is periodically introduced. However, this solution is not resolutory, requires continuous lubrication and besides the related costs, the substances used to this end are dispersed to the environment. Also the traditional provision of a manual extractor, coupled to the bottom of the outside body and intended for pushing the baffle or plug to be released upwards implies additional production costs and requires regular interventions by an operator.

A further important disadvantage found in known baffle taps relates to the poor seal of the circulating fluid or slurry, mainly due to both the type of rough fusion of the components and to the existing clearance, basically high for limiting the aforementioned sticking as much as possible.

The object of the present invention is to obviate the disadvantages mentioned hereinabove.

More in particular, the object of the present invention is to provide a baffle tap for tanks carried by vehicles, especially suitable for tankers, intended for being easily operated in any condition, without sticking, even in the presence of thick slurry containing solid residues.

A further object of the invention is to provide a baffle tap as defined above wherein such easy operation should be obtainable also without the aid of servo-mechanisms, lubricators or manual emergency extractors.

Last but not least, an object of the invention is to provide a baffle tap intended for ensuring accurate seal of the circulating slurry or fluid in all the parts thereof.

A further object of the invention is to provide the users with a baffle tap intended for ensuring high level of resistance and reliability over time, also such as to be easily and inexpensively constructed.

These and other objects are achieved by the baffle tap according to claim 1.

The construction and functional features of the baffle tap of the present invention shall be better understood from the following detailed description, wherein reference is made to the annexed drawing tables showing a preferred and non-limiting embodiment thereof, wherein:
figure 1 shows a schematic perspective view of the baffle tap of the present invention, by way of an example without the top covering plate thereof;
figure 2 shows an exploded schematic view of the same baffle tap;
figure 3 shows a schematic front view of the inner body or plug of the same baffle tap;
figure 4 shows a schematic section view according to line A-A of figure 3 of the same plug of the baffle tap;
figures 5 and 6 show schematic views of as many enlarged details of the plug of the baffle tap according to figure 4.

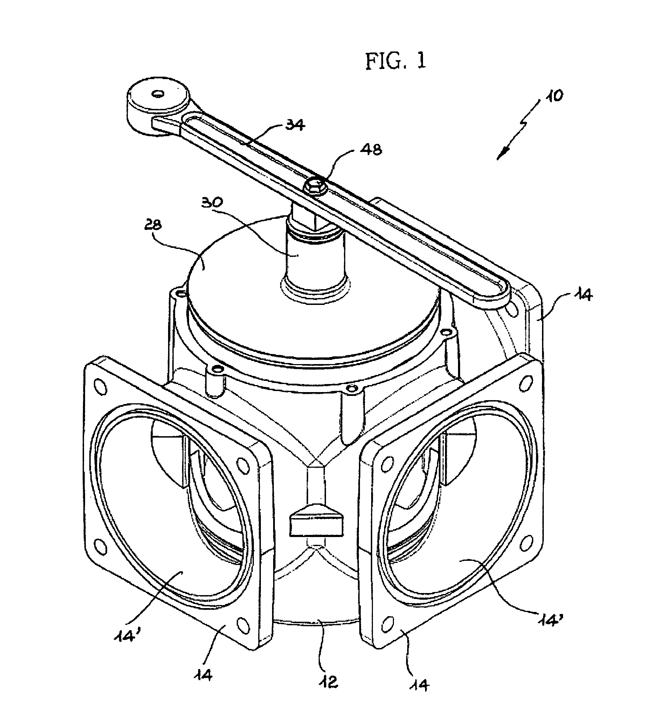

With reference to the above mentioned figures, the baffle tap of the present invention, globally indicated with reference numeral 10 in figure 1, comprises an outside body 12 of substantially cylindrical shape, provided with radial extensions carrying integral flanges 14 oriented orthogonally relative to each other and developed according to parallel planes relative to the longitudinal axis of the body itself. In the embodiment shown in the figures, by way of an example the baffle tap is of the three-way type and as a consequence, there are three flanges 14, two of which are opposite and circumscribe as many circular openings 14'.

The interior of body 12 defines a cylindrical cavity 16, which develops by the entire height of the body and ends in the base of the body itself, which, at the opposite top end, is closed by a plate 18 through screws 20. Plate 18 is centrally provided with an opening, preferably a collar 24 intended for seating the operating stem of the plug, that is, of the control member/plug that actually acts as baffle of tap 10.

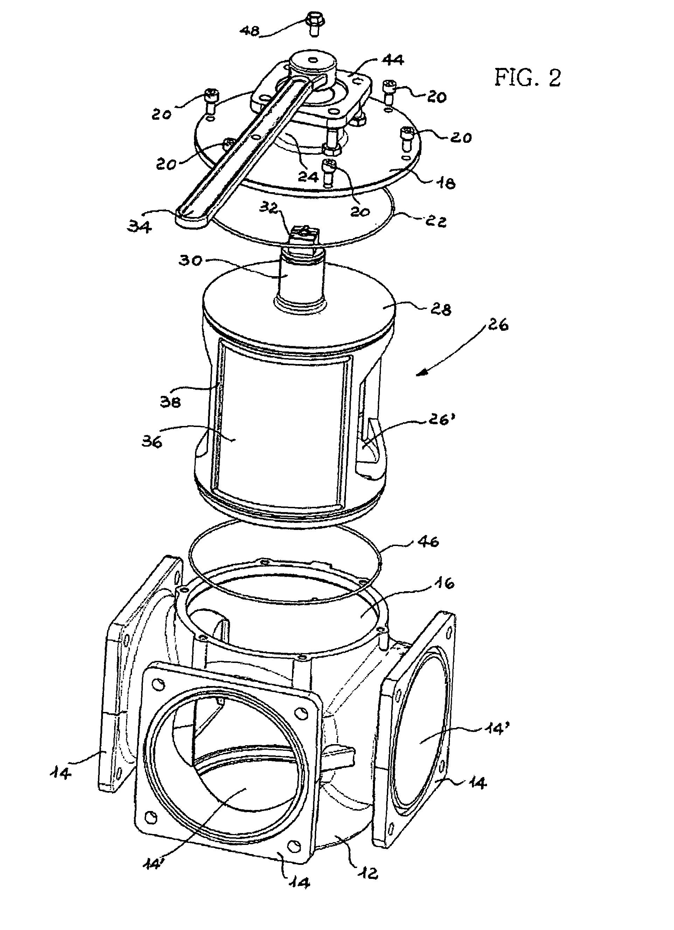

According to the invention said plug , indicated with reference numeral 26 in figures 2, 3 and 4, defines a body of cylindrical shape, complementary to that of cavity 16 of body 12 it is inserted in, having a diameter slightly smaller than that of the cavity itself; the height of plug 26 substantially matches that of body 12. A cylindrical integral appendix or hub 30 centrally protrudes from the top base of plug 26, indicated with reference numeral 28, whose end 32 is suitably shaped for seating a lever 34 intended for moving the plug itself, as better detailed hereinafter. Like body 12, also plug 26 is provided with three adjacent openings 26' orthogonal to each other, intended for communicating with openings 14' of the same body 12. The remaining portion of the side surface of plug 26 defines a wall 36 without openings, which constitutes the zone intended for closing from inside body 12, alternately one or the other of openings 14' according to the angular positioning of the plug itself.

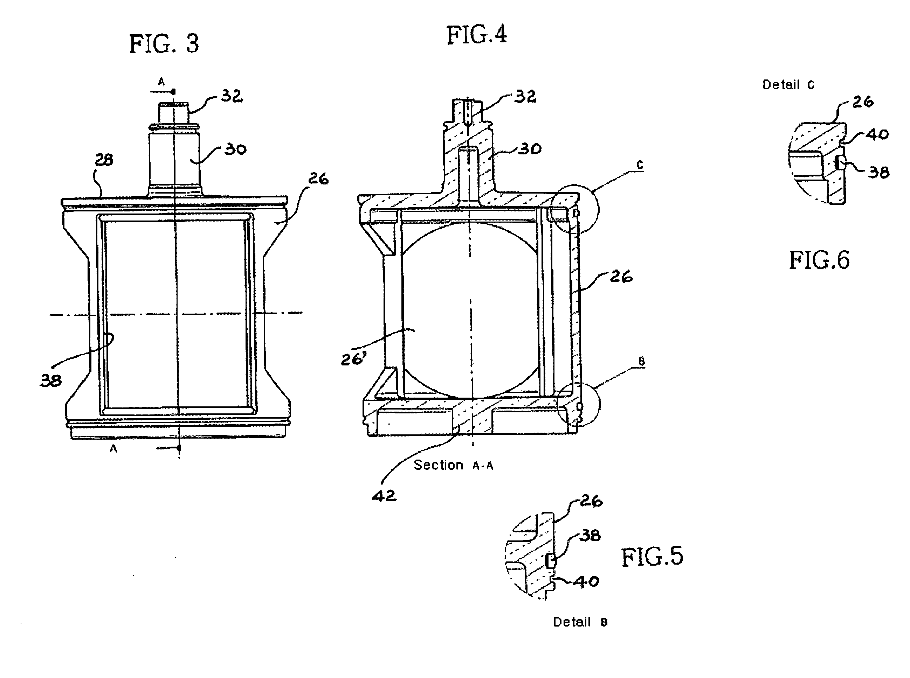

A seal 38, preferably with quadrangular development, whose size is larger than that of openings 14' of body 12, is advantageously arranged along said wall 36; seal 38 is arranged in a recessed seat formed along wall 36 and according to a preferred embodiment, is made of hydrogenated nitrile butadiene rubber (HNBR). The stabilisation of said seal is typically obtained by cure, which makes it definitely integral with wall 36 of plug 26, from which it protrudes by an extent indicatively comprised between 0.2 and 1.8 mm. Such projection of seal 38 may cause a potential shift of plug 26 relative to body 12 wherein it is inserted; to prevent this possible disadvantage it is advantageously possible to use circumferential seals such as OR 22, 46, or centring rings, arranged on plug 26 at the top and/or bottom edge where there are corresponding grooves 40, schematised in figures 5 and 6. Instead of the aforementioned seals, or optionally in addition thereto, the use of a bearing or the like should be envisaged, combined with the central protruding wall 42 of the base of plug 26 and arranged in a complementary seat obtained in the base of body 12.

Plug 26 inserted in body 12 is overlapped by plate 18, whose central collar 24 delimits hub 30 protruding from the plug itself; said collar 24 may be coupled to a flange 44 for the optional connection of servo-mechanisms in replacement of lever 34. Plate 18 is attached to the top edge of body 12 by screws 20.

Advantageously, lever 34 defines two alternative possibilities of use, since it exhibits two different attachment points to the shaped end 32 of hub 30. In one case, as illustrated in figure 2, lever 34 is constrained by one of the ends thereof to hub 30 by a screw 48 and thus forms an extended arm that aids the movement of rotation of plug 26. In the other case, schematised in figure 1, lever 34 is attached, starting from the central zone thereof, to hub 30 itself, so it may be gripped with two hands for the easy extraction of plug 26 from body 12 for inspection and/or cleaning operations.

In operation, seal 38 of wall 36 of plug 26 constantly ensures the leak-proof seal of the slurry, accurately closing the opening 14' not concerned by the dispensing, whereas OR 22, 46 arranged in grooves 40 of the plug itself ensure accurate alignment in axis of the bodies. The cylindrical shape of said plug 26, moreover, prevents possible seizure or sticking phenomena, excluding the need of lubricators and extractors; the manoeuvrability in rotation of plug 26 is constantly easy, provided that the solid residues of slurry do not concern the contiguous surfaces of the two bodies by the effect of the precise tightness of seal 38. The latter may exhibit any shape and development and be attached also or only inside body 12 around openings 14'. Moreover, plug 26 should be usable also in two-way baffle taps, provided that the tightness of seal 38 is effective; as an alternative, moreover, it is possible to apply a similar seal 38 suitably sized, or two of such seals, on plugs specifically intended for two-way baffle taps. Seal 38, moreover, may be extended in horizontal direction in the top side and in the bottom one of plug 26, to extend circumferentially or by portions and form, in replacement of OR 22, 46, as many equivalent centring members of the plug itself relative to body 12.

Even if the invention has been described hereinbefore with particular reference to an embodiment thereof made by way of a non-limiting example, several changes and variations will appear clearly to a man skilled in the art in the light of the above description. The present invention therefore is intended to include any changes and variations thereof falling within the spirit and the scope of protection of the following claims.

## Claims

1. Baffle tap (10) for tanks carried by vehicles, in particular for tankers for carrying and distributing slurry, comprising:
a substantially cylindrical outside body (12) closed at the top and provided with side openings (14') delimited by integral flanges (14), and
a turnable control member/plug (26) inserted inside said outside body (12) and provided with openings (26') intended for the communication between said openings (14') of the body (12), **characterised in that** said control member/plug (26) exhibits a cylindrical shape complementary to that of the body (12).

2. The baffle tap according to claim 1, **characterised in that** the plug (26) is provided, along the side surface thereof, with a seal (38) whose shape and/or development are greater than the size of the openings (14') of the body (12).

3. The baffle tap according to the previous claims, **characterised in that** the body (12) and the plug (26) are provided with three openings (14') and (26') respectively orthogonal to each other, two of which opposite, developed according to planes parallel to the longitudinal axis of the tap (10), the seal (38) being arranged on a wall (36) comprised between the two opposite openings (26') of the plug (26).

4. The baffle tap according to one or more of the previous claims, **characterised in that** the seal (38) defines a quadrangular development and is arranged in a recessed seat of the wall (36) from which it protrudes in the direction of the body (12) by an extent comprised between 0.2 and 1.8 mm.

5. The baffle tap according to one or more of the previous claims, **characterised in that** the seal (38) consists of hydrogenated nitrile butadiene rubber and is cured in said recessed seat of the wall (36) of the plug (26).

6. The baffle tap according to one or more of the previous claims, **characterised in that** the plug (26) is provided, at or in the proximity of the top and/or bottom edge, with a groove (40) for a seal or a centring ring relative to the body (12) it is inserted in.

7. The baffle tap according to one or more of the previous claims, **characterised in that** the bottom portion (42) projecting from the base of the plug (26) is coupled with a bearing or the like, abutted in a complementary seat obtained in the base of the body (12).

8. The baffle tap according to one or more of the previous claims, **characterised in that** said plate (18) is centrally provided with a collar (24), which delimits the operating stem of the plug (26) comprised of a central hub (30) that centrally protrudes from the top base (28) of the plug itself and is provided with shaped end (32) for attaching an operating lever (34) by a screw (48) or the like.

9. The baffle tap according to one or more of the previous claims, **characterised in that** said operating lever (34) is provided with two alternative seats for the attachment to the hub (30), respectively obtained at an end of the lever itself and in substantially central position.

10. The baffle tap according to one or more of the previous claims, **characterised in that** the collar (24) of the plate (18) it coupled with a flange (44) for the connection of servo-mechanisms or the like.
